# EUROPÄISCHE PATENTSCHRIFT

(11) **EP 0 642 707 B1**
(45) Veröffentlichungstag und Bekanntmachung des Hinweises auf die Patenterteilung: **08.11.1995**
(21) Anmeldenummer: 93911435.1
(22) Anmeldetag: 05.05.1993
(51) Int. Cl.: H02P 9/04

(54) **VERFAHREN UND REGELEINRICHTUNG ZUR REGELUNG EINER TURBINEN-GENERATOR-ANORDNUNG**
PROCESS AND DEVICE FOR REGULATING A TURBINE-GENERATOR ARRANGEMENT
PROCEDE ET DISPOSITIF DE REGULATION D'UN ENSEMBLE TURBINE-GENERATEUR

(30) Priorität: 27.05.1992 DE 4217625
(43) Veröffentlichungstag der Anmeldung: 15.03.1995
(73) Patentinhaber: SIEMENS AKTIENGESELLSCHAFT, 80333 München (DE)
(72) Erfinder: FORK, Kurt, D-8524 Neunkirchen (DE); KRUTEMEIER, Frank, D-8520 Erlangen (DE)
(86) Internationale Anmeldenummer: DE9300391
(87) Internationale Veröffentlichungsnummer: WO9324991

(56) Entgegenhaltungen:
- DE-A- 2 447 632
- DE-A- 3 438 452
- DE-A- 3 811 103
- IEEE TRANSACTIONS ON ENERGY CONVERSION, Bd. 4, Nr. 1, März 1989, NEW YORK, US, Seiten 54 -61; WENYAN GU ET AL: 'A DECOUPLER DESIGN METHOD FOR SYNCHRONOUS-MACHINE-INFINITE-BUS SYSTEM'

## Beschreibung

Die Erfindung bezieht sich auf ein Verfahren zur Regelung einer Turbinen-Generator-Anordnung, bei dem einem Turbinenstellglied eine erste Stellgröße und einem Erregerstellglied eine zweite Stellgröße zugeführt wird, wobei die Stellgrößen aus jeweils mindestens einem Vergleichswert gebildet werden. Sie richtet sich weiter auf eine nach diesem Verfahren arbeitende Regeleinrichtung.

Ausgehend von einem einfachen mechanischen Drehzahlregler für eine Turbine und einem elektromechanischen Spannungsregler für einen Generator wurden im Laufe der Zeit die Regelgeräte oder Regeleinrichtungen in Kraftwerken, z.B. in Gas- und Dampfturbinenanlagen, ständig verbessert und der Entwicklung der Technik angepaßt.

Bei einem bekannten Regelungsverfahren wird die Menge des in die Turbine einströmenden Arbeitsmediums über ein Turbinenstellglied gesteuert, dessen Stellgröße in einem Regelkreis aus der Abweichung der Ist-Leistung des Generators von einer Soll-Leistung gebildet wird. In einem weiteren Regelkreis wird aus der Abweichung der Ist-Spannung des Generators von einer Soll-Spannung eine weitere Stellgröße gebildet, die einem den Erregerstrom des Generators steuernden Erregerstellglied zugeführt wird.

Über die aus Turbine, Generator und einem vom Generator gespeisten Netz aufgebaute Regelstrecke beeinflussen sich die Regelkreise gegenseitig. Dies kann dazu führen, daß bei Ausgleichsvorgängen unter Beeinträchtigung des Gesamtregelverhaltens die Regelkreise gegeneinander arbeiten. Um diesen Einfluß auszugleichen, wird bei dem bekannten Verfahren eine aus der Generatorleistung abgeleitete Korrekturgröße als Teilstellgröße dem Erregerstellglied zugeführt.

Damit werden Netzschwankungen oder Änderungen der Schlupffrequenz ausgeglichen und Leistungspendelungen gedämpft. Derartige Leistungspendelungen treten insbesondere bei Kraftwerksanlagen auf, die über lange Leitungen mit einem Verbundnetz gekoppelt sind. Eine Schaltungsanordnung zur Bedämpfung von Leistungspendelungen in Netzen ist z.B. in der DE-PS 28 51 871 beschrieben.

Bei Verwendung einer Dampfturbine reicht zwar die vereinfachende Annahme einer dynamischen Entkopplung der Regelkreise zur Beschreibung des Gesamtsystems noch aus. Dagegen treten bei Verwendung einer Gasturbine aufgrund der gegenüber der Dampfturbine vergleichsweise kleinen Verzögerungen oder Reaktionszeiten der Gasturbine unerwünschte Kopplungen auf, die zu einer Entdämpfung der getrennten Regelungen führen können. Derartige Kopplungsprobleme treten auch bei Anlagen mit mehreren Turbinen-Generatorsätzen, insbesondere bei Gas-und Dampfturbinen-Anlagen, auf. Zwar wird mit der erwähnten Schaltungsanordnung zur Bedämpfung von Leistungspendelungen, die in einem sogenannten Pendeldämpfungsgerät realisiert ist, ein gewisser Einfluß des Regelkreises der Turbine auf den Regelkreis des Generators erreicht. Dennoch arbeiten die beiden Regelkreise getrennt voneinander.

Der Erfindung liegt die Aufgabe zugrunde, ein Verfahren und eine Regeleinrichtung der eingangs genannten Art derart weiterzubilden, daß eine zuverlässige Regelung der Turbinen-Generator-Anordnung möglich ist.

Bezüglich des Verfahrens wird diese Aufgabe erfindungsgemäß dadurch gelöst, daß die erste Stellgröße für das Turbinenstellglied aus mindestens zwei Teilstellgrößen zusammengesetzt wird, wobei eine Teilstellgröße aus dem Vergleichswert zur Bildung der zweiten Stellgröße für das Erregerstellglied abgeleitet ist.

In vorteilhafter Weiterbildung des erfindungsgemäßen Verfahrens wird die Stellgröße für das Erregerstellglied ebenfalls aus mindestens zwei Teilstellgrößen zusammengesetzt, wobei eine Teilstellgröße aus dem Vergleichswert zur Bildung der Stellgröße für das Turbinenstellglied abgeleitet ist.

Zur Verbesserung der Regelung hinsichtlich der Dynamik des Gesamtsystems wird zweckmäßigerweise die Drehzahl der Turbine und/oder, bei einer Kopplung der Turbinen-Generator-Anordnung mit einem Verbundnetz, die Generatorfrequenz gemessen. Die Stellgrößen sind dann vorteilhafterweise jeweils aus drei Teilstellgrößen zusammengesetzt. Dabei ist jeweils eine der drei Teilstellgrößen aus einem aus einer Abweichung von der Soll-Drehzahl bzw. von der Netzfrequenz gebildeten Vergleichswert abgeleitet. Um zu vermeiden, daß dann durch das Mißverhältnis von drei Regelgrößen und zwei Stellgrößen undefinierte Zustände entstehen, sind vorteilhafterweise die aus einer Frequenzabweichung und aus einer Abweichung der abgegebenen Generatorleistung von der geforderten Generatorleistung gebildeten Vergleichswerte wechselseitig gekoppelt. Dabei erfolgt die Kopplung zweckmäßigerweise über Verzögerungsglieder.

Bezüglich der Regeleinrichtung, die einen Regler umfaßt, dem als Eingangsgrößen Ist-Werte der Generatorleistung und der Generatorspannung zugeführt sind, und der an ein Turbinenstellglied eine erste Stellgröße und an ein Erregerstellglied eine zweite Stellgröße abgibt, wobei die Stellgrößen aus jeweils mindestens einem Vergleichswert gebildet sind, wird die Aufgabe erfindungsgemäß gelöst durch Mittel zum Verknüpfen mindestens zweier Teilstellgrößen, die zusammen die erste Stellgröße für das Turbinenstellglied bilden, wobei eine Teilstellgröße aus dem Vergleichswert zur Bildung der zweiten Stellgröße für das Erregerstellglied abgeleitet ist.

In zweckmäßiger Ausgestaltung der Regeleinrichtung umfaßt diese weitere Mittel zum Verknüpfen zweier weiterer Teilstellgrößen, die ihrerseits zusammen die zweite Stellgröße für das Erregerstellglied bilden, wobei eine dieser Teilstellgrößen aus dem Vergleichswert zur Bildung der Stellgröße für das Turbinenstellglied abgeleitet ist.

Die zur Bereitstellung der Stellgrößen für das Turbinenstellglied und das Erregerstellglied erforderlichen Funktionen, die den jeweiligen Einfluß der Leistung, der Generatorspannung und der Generatorfrequenz oder Turbinendrehzahl auf die Stellgrößen beschreiben, sind zweckmäßigerweise in Form eines Algorithmus in einem einzigen Regler zusammengefaßt.

Die mit der Erfindung erzielten Vorteile bestehen insbesondere darin, daß durch eine wechselseitige Übertragung der Vergleichswerte der Regelkreise der Turbine und des Generators über Teilstellgrößen eine Kommunikation zwischen den sich gegenseitig beeinflussenden Regelkreisen stattfinden kann. Die dazu erforderlichen Funktionen können als Algorithmus in einem einzigen Regler realisiert werden. Ein derartiger Regler wird als Zweigrößen- oder Mehrfachregler bezeichnet.

Ein Ausführungsbeispiel der Erfindung wird anhand einer Zeichnung näher erläutert. Sie zeigt ein Blockschaltbild einer Regelschaltung für eine Turbinen-Generator-Anordnung.

Die Turbinen-Generator-Anordnung 1 umfaßt eine Turbine 2, die über eine Welle 4 einen Generator 6 antreibt. Der Generator 6 speist bei geschlossenem Blockschalter 5 in ein Versorgungsnetz 7 ein. Die Turbine 2 kann eine Gas- oder eine Dampfturbine sein.

Zum Einstellen des Stroms des in die Turbine 2 einströmenden Arbeitsmediums a ist ein Stellglied 8 in Form eines Ventils oder einer Anzahl von Ventilen vorgesehen.

Der rotierende Erregerteil 14 des Generators 6 wird von einer im Stator angeordneten Feldwicklung 16 erregt. Ein nicht dargestellter Hilfserreger speist über ein Erregerstellglied 18 in Form eines Thyristor-Satzes die Feldwicklung 16. Das Erregerstellglied 18 bildet den für die Erregung erforderlichen variablen Gleichstrom oder Erregerstrom g.

Einer Regeleinrichtung oder einem Turbosatz- oder Mehrfachregler 20 werden als Eingangsgrößen Ist-Werte der Generatorleistung Pᵢ, der Generatorspannung Uᵢ sowie der Turbinendrehzahl nᵢ oder der Generatorfrequenz fᵢ zugeführt. In dem Mehrfachregler 20 eingegebene Größen sind auch die Soll-Werte der Generatorleistung Pₛ, der Generatorspannung Uₛ und der Turbinendrehzahl nₛ. Weitere, durch den Pfeil 22 angedeutete Eingangsgrößen sind Führungsgrößen, z.B. die Netzfrequenz fₛ, Begrenzungsstellgrößen und Befehle aus einer Kraftwerksleitwarte. Vom Mehrfachregler 20 abgegebene Stellgrößen ST und SE werden dem Turbinenstellglied 8 bzw. dem Erregerstellglied 18 aufgegeben.

Die Stellgrößen ST und SE werden aus Teilstellgrößen ST₁ bis ST₃ bzw. SE₁ bis SE₃ zusammengesetzt, die mit Hilfe von Baugliedern 30 bis 35 zur Bildung von Übertragungsfunktionen F_{f1}, F_{P1} und F_{U1} bzw. F_{f2}, F_{P2} und F_{U2} jeweils aus einem Vergleichswert Δ f oder Δ n, Δ P, Δ U abgeleitet sind. Derartige Übertragungsfunktionen F sind z.B. beschrieben in IEEE Transactions on Automatic Control, Vol. AC-25, No. 3, 1980, Desoer, C., R.-W. Liu, J. Murray und R. Saeks: "Feedback System Design: The Fractional Representation Approach to Analysis and Synthesis" und Müller, K.: "Ein Entwurfsverfahren für selbsteinstellende robuste Regelungen", Dissertation TU Braunschweig 1989. Einzelheiten hierzu finden sich auch in "Archiv für Elektrotechnik", 76 (1992) 49-58, Springer Verlag. Die Vergleichswerte Δ f oder Δn, ΔP, ΔU ergeben sich durch Differenzbildung zwischen den Ist-Werten fᵢ oder nᵢ, Pᵢ bzw. Uᵢ und den Soll-Werten fₛ oder nₛ, Pₛ bzw. Uₛ in den jeweiligen Vergleichspunkten 40, 41, 42. Dabei werden die Werte vorzugsweise zunächst mit Hilfe von (nicht gezeigten) Analog-Digital-Wandlern in Digital-Werte umgewandelt.

Bei geschlossenem Blockschalter 5 werden die Vergleichswerte Δ f und Δ P wechselseitig oder in zweifacher Weise miteinander gekoppelt. Dazu wird einmal der aus einer Abweichung der Ist-Leistung Pᵢ von der Soll-Leistung Pₛ des Generators 6 gebildete Vergleichswert Δ P über ein Verzögerungsglied 24 dem Vergleichswert Δ f in einer Additionsstelle 50 aufaddiert. Außerdem wird der aus einer Abweichung der Generatorfrequenz fᵢ von der Netzfrequenz fₛ gebildete Vergleichswert Δ f als Kehrwert 1/Δ f über ein Verzögerungsglied 26 dem Vergleichswert Δ P in einer Additionsstelle 51 aufaddiert.

Aufgrund der unvermeidlichen Komplexität des Mehrfachreglers 20, insbesondere der sechs Übertragungsfunktionen F, werden zur Regelung rechnergestützte Algorithmen (Rechnerprogramm) angewendet. Dabei berücksichtigt der Regelalgorithmus auch den Fall, daß eine Regelgröße einen Begrenzungswert erreicht, oder daß z.B. während eines Anfahrvorgangs einer Kraftwerksanlage nur der das Turbinenstellglied 8 steuernde Turbinen-Regelkreis eingeschaltet ist. Eine Umschaltung auf eine kombinierte Regelung, die bei einer Speisung des Erregerteils 14 über die Feldwicklung 16 und damit beim Aufbau der Generatorspannung U einsetzt, ist jederzeit möglich. Dabei findet mittels der sechs Übertragungsfunktionen F eine Kommunikation zwischen dem Turbinen-Regelkreis und dem Generator-Regelkreis statt, wobei dann das Erregerstellglied 18 den variablen Erregerstrom g einstellt.

Innerhalb des Mehrfachreglers 20 wird aus den Teilstellgrößen ST₁ bis ST₃ mittels eines Verknüpfungsglieds 19 die Stellgröße ST für das Turbinenstellglied 8 zusammengesetzt. Dabei wird der Einfluß einer Abweichung Δ U des Ist-Werts der Generatorspannung Uᵢ vom Soll-Wert Uₛ auf die Stellgröße ST mittels der Ubertragungsfunktion F_{U1} realisiert. Der Einfluß einer Abweichung Δ f der Generatorfrequenz fᵢ von der Netzfrequenz fₛ auf die Stellgröße ST wird mittels der Übertragungsfunktion F_{f1} realisiert.

Entsprechend wird aus den Teilstellgrößen SE₁ bis SE₃ mittels eines weiteren Verknüpfungsglieds 21 die Stellgröße SE für das Erregerstellglied 18 zusammengesetzt. Dabei wird der Einfluß einer Abweichung Δ P des Ist-Werts Pᵢ der Generatorleistung P vom Soll-Wert Pₛ und einer Frequenzabweichung Δ f auf die Stellgröße SE mittels der Übertragungsfunktionen F_{P2} bzw. F_{f2} realisiert. Die aus den Teilstellgrößen zusammengesetzten Stellgrößen ST und SE werden den Stellgliedern 8, 18 über Verzögerungsglieder 28 bzw. 30 aufgegeben.

Die Berücksichtigung der Frequenzänderung Δ f bei der Bildung der Stellgrößen ST, SE ermöglicht eine Verbesserung der Regelung hinsichtlich der Dynamik der aus Turbine 2, Generator 6 und Netz 7 zusammengesetzten Regelstrecke. Darüber hinaus wird durch die wechselseitige oder zweifache Kopplung der Vergleichswerte Δ P und Δ f über die Verzögerungsglieder 24 bzw. 26 sichergestellt, daß durch das Mißverhältnis von drei Regelgrößen f, P, U und zwei Stellgrößen ST, SE keine undefinierten Zustände entstehen. Die Verzögerungsglieder 24, 26 in der Kopplung beeinflussen nur den stationären Zustand; sie müssen im konzeptionellen Regelentwurf nicht berücksichtigt werden.

Während des Betriebs können Verschleiß oder Verschmutzung von Bauteilen sowie Arbeitspunktverschiebungen und Netzumschaltungen zu unvorhersehbaren, nur in der Größenordnung abschätzbaren Änderungen in der Regelstrecke führen. Daher sollte der Regelalgorithmus des Mehrfachreglers 20 gegen derartige Änderungen in der Regelstrecke unempfindlich oder robust sein. Da sich das Verhalten der Regelstrecke bei einer Umschaltung von einem Betriebsmittel für die Turbine 2 auf ein anderes sowie beim Übergang vom Verbundnetz- zum Inselnetzbetrieb sehr stark ändern kann, ist eine Adaptionsstrategie in den Mehrfachregler 20 eingebaut. Dabei wird die Einstellung des Mehrfachreglers 20 aus bekannten, bei der Inbetriebsetzung und aus Simulationen gewonnenen Erfahrungen nachgeführt, die in Form von Modellrechnungen, z.B. in den Übertragungsfunktionen F, berücksichtigt sind. Eine Nachführung des Mehrfachreglers 20 erfolgt somit sowohl auf der Basis meßbarer als auch rechnerisch ermittelter Größen des Prozesses.

Die Regelgüte des Mehrfachreglers 20 wird während des Betriebs automatisch beurteilt. Die Beurteilung ist mehrstufig aufgebaut. In einer ersten Stufe werden aus Meßgrößen nicht meßbare Größen, z.B. die Netzreaktanz, errechnet und Kennwerte analytisch bestimmt. In einer zweiten Stufe werden diese Rechenwerte mit Erfahrungswerten verglichen, die in geeigneter Form im Mehrfachregler 20 enthalten sind. Dabei erfolgt die Beurteilung in Anlehnung an das Prinzip der fuzzy logic auf der Basis von Vergleichsoperationen mit unscharfen Bereichen.

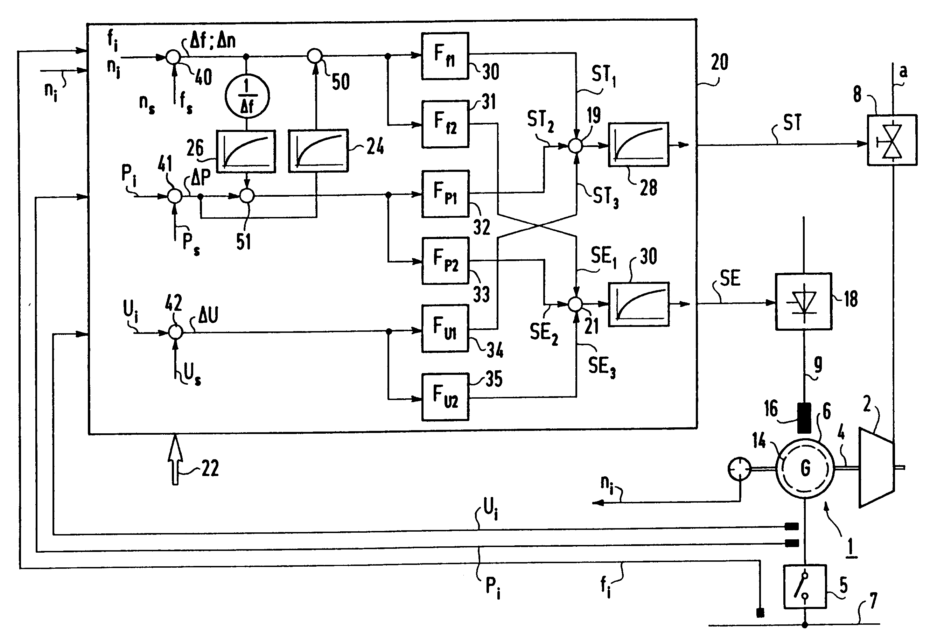

## Patentansprüche

1. Verfahren zur Regelung einer Turbinen-Generator-Anordnung, bei dem einem Turbinenstellglied (8) eine erste Stellgröße (ST) und einem Erregerstellglied (18) eine zweite Stellgröße (SE) zugeführt wird, wobei die Stellgrößen (ST, SE) aus jeweils mindestens einem Vergleichswert (Δ P, Δ U) gebildet werden,
**dadurch gekennzeichnet**, daß die erste Stellgröße (ST) für das Turbinenstellglied (8) aus mindestens zwei Teilstellgrößen (ST₂, ST₃) zusammengesetzt wird, wobei die eine der beiden Teilstellgrößen (ST₃) aus dem Vergleichswert ( Δ U) zur Bildung der zweiten Stellgröße (SE) für das Erregerstellglied (18) abgeleitet ist.

2. Verfahren nach Anspruch 1,
**dadurch gekennzeichnet**, daß die Stellgröße (SE) für das Erregerstellglied (18) aus mindestens zwei Teilstellgrößen (SE₂, SE₃) zusammengesetzt wird, wobei die eine der beiden Teilstellgrößen (SE₂) aus dem Vergleichswert (ΔP) zur Bildung der ersten Stellgröße (ST) für das Turbinenstellglied (8) abgeleitet ist.

3. Verfahren nach Anspruch 1 oder 2,
**dadurch gekennzeichnet**, daß die erste und zweite Stellgröße (ST, SE) jeweils aus drei Teilstellgrößen (ST₁ bis ST₃; SE₁ bis SE₃) zusammengesetzt werden, wobei jeweils eine Teilstellgröße (ST₁; SE₁) aus einem aus einer Abweichung der Ist-Drehzahl (nᵢ) von der Soll-Drehzahl (nₛ) der Turbine (2) gebildeten Vergleichswert ( Δ n) abgeleitet ist.

4. Verfahren nach Anspruch 1 oder 2 bei einer Kopplung der Turbinen-Generator-Anordnung mit einem Verbundnetz,
**dadurch gekennzeichnet**, daß die erste und zweite Stellgröße (ST, SE) jeweils aus drei Teilstellgrößen (ST₁ bis ST₃; SE₁ bis SE₃) zusammengesetzt werden, wobei jeweils eine Teilstellgröße (ST₁; SE₁) aus einem aus einer Abweichung der Generatorfrequenz (fᵢ) von der Netzfrequenz (f) gebildeten Vergleichswert ( Δ f) abgeleitet ist.

5. Verfahren nach Anspruch 4, wobei die aus einer Abweichung der Generatorfrequenz (fᵢ) von der Netzfrequenz (fₛ) und aus einer Abweichung der Ist-Leistung (Pᵢ) von der Soll-Leistung (Pₛ) des Generators (6) gebildeten Vergleichswerte ( Δ f, Δ P) wechselseitig gekoppelt sind.

6. Verfahren nach einem der Ansprüche 1 bis 5,
**dadurch gekennzeichnet**, daß der Vergleichswert (Δ P) zur Bildung der ersten Stellgröße (ST) die Abweichung der Generatorleistung ist.

7. Verfahren nach einem der Ansprüche 1 bis 6,
**dadurch gekennzeichnet**, daß der Vergleichswert (Δ U) zur Bildung der zweiten Stellgröße (SE) die Abweichung der Generatorspannung ist.

8. Regeleinrichtung zur Regelung einer Turbinen-Generator-Anordnung mit einem Regler (20), dem als Eingangsgrößen Ist-Werte der Generatorleistung (P) und der Generatorspannung (U) zugeführt sind, und der an ein Turbinenstellglied (8) eine erste Stellgröße (ST) und an ein Erregerstellglied (18) eine zweite Stellgröße (SE) abgibt, wobei die Stellgrößen (SE, ST) aus jeweils mindestens einem Vergleichswert (Δ P, Δ U) gebildet sind,
**gekennzeichnet durch** Mittel (19) zum Verknüpfen mindestens zweier Teilstellgrößen (ST₂, ST₃), die zusammen die erste Stellgröße (ST) für das Turbinenstellglied (8) bilden, wobei die eine Teilstellgröße (ST₃) aus dem Vergleichswert (Δ U) zur Bildung der zweiten Stellgröße (SE) für das Erregerstellglied (18) abgeleitet ist.

9. Regeleinrichtung nach Anspruch 8,
**gekennzeichnet durch** weitere Mittel (21) zum Verknüpfen mindestens zweier Teilstellgrößen (SE₂, SE₃), die zusammen die zweite Stellgröße (SE) für das Erregerstellglied (18) bilden, wobei die eine Teilstellgröße (SE₂) aus dem Vergleichswert (Δ P) zur Bildung der Stellgröße (ST) für das Turbinenstellglied (8) abgeleitet ist.

## Claims

1. Method for the closed-loop control of a turbine-generator arrangement, in which a turbine control element (8) is supplied with a first correcting variable (ST) and an exciter control element (18) is supplied with a second correcting variable (SE), the correcting variables (ST, SE) being formed from in each case at least one reference value (ΔP, ΔU), characterized in that the first correcting variable (ST) for the turbine control element (8) is composed of at least two partial correcting variables (ST₂, ST₃), one of the two partial correcting variables (ST₃) being derived from the reference value (ΔU) for forming the second correcting variable (SE) for the exciter control element (18).

2. Method according to Claim 1, characterized in that the correcting variable (SE) for the exciter control element (18) is composed of at least two partial correcting variables (SE₂, SE₃), one of the two partial correcting variables (SE₂) being derived from the reference value (ΔP) for forming the first correcting variable (ST) for the turbine control element (8).

3. Method according to Claim 1 or 2, characterized in that the first and second correcting variable (ST, SE) are in each case composed of three partial correcting variables (ST₁ to ST₃; SE₁ to SE₃), one partial correcting variable (ST₁; SE₁) in each case being derived from a reference value (Δn) formed from a deviation of the actual speed (nᵢ) from the setpoint speed (nₛ) of the turbine (2).

4. Method according to Claim 1 or 2 when the turbine-generator arrangement is coupled to an interconnected power system, characterized in that the first and second correcting variable (ST, SE) are in each case composed of three partial correcting variables (ST₁ to ST₃; SE₁ to SE₃), one partial correcting variable (ST₁; SE₁) in each case being derived from a reference value (Δf) formed from a deviation of the generator frequency (fᵢ) from the power system frequency (f).

5. Method according to Claim 4, wherein the reference values (Δf, ΔP) formed from a deviation of the generator frequency (fᵢ) from the power system frequency (fₛ) and from a deviation of the actual power (Pᵢ) from the setpoint power (Pₛ) of the generator (6) are cross coupled.

6. Method according to one of Claims 1 to 5, characterized in that the reference value (ΔP) for forming the first correcting variable (ST) is the deviation of the generator power.

7. Method according to one of Claims 1 to 6, characterized in that the reference value (ΔU) for forming the second correcting variable (SE) is the deviation of the generator voltage.

8. Closed-loop control device for controlling a turbine-generator arrangement with a controller (20) which is supplied with actual values of the generator power (P) and of the generator voltage (U) as input variables and which outputs a first correcting variable (ST) to a turbine control element (8) and a second correcting variable (SE) to an exciter control element (18), the correcting variables (SE, ST) being formed from in each case at least one reference value (ΔP, ΔU), characterized by means (19) for combining at least two partial correcting variables (ST₂, ST₃) which, together, form the first correcting variable (ST) for the turbine control element (8), one partial correcting variable (ST₃) being derived from the reference value (ΔU) for forming the second correcting variable (SE) for the exciter control element (18).

9. Closed-loop control device according to Claim 8, characterized by further means (21) for combining at least two partial correcting variables (SE₂, SE₃) which, together, form the second correcting variable (SE) for the exciter control element (18), one partial correcting variable (SE₂) being derived from the reference value (ΔP) for forming the correcting variable (ST) for the turbine control element (8).

## Revendications

1. Procédé pour régler un groupe turbine-génératrice, dans lequel on envoie à un organe (8) de réglage de la turbine une première grandeur de réglage (ST) et à un organe (18) de réglage de l'excitatrice une seconde grandeur de réglage (SE), les grandeurs de réglage (ST, SE) étant formées à partir respectivement d'au moins une valeur de comparaison (ΔP, ΔU), caractérisé par le fait que la première grandeur de réglage (ST) pour l'organe (8) de réglage de la turbine est composée d'au moins deux grandeurs de réglage partielles (ST₂, ST₃), l'une des deux grandeurs de réglage partielles (ST₃) étant obtenue à partir de la valeur de comparaison (ΔU) pour la formation de la seconde grandeur de réglage (SE) pour l'organe (18) de réglage de l'excitatrice.

2. Procédé suivant la revendication 1, caractérisé par le fait que la grandeur de réglage (SE) pour l'organe (18) de réglage de l'excitatrice est composée d'au moins deux grandeurs de réglage partielles (SE₂, SE₃), l'une des deux grandeurs de réglage partielles (SE₂) étant obtenue à partir de la valeur de comparaison (ΔP) pour la formation de la première grandeur de réglage (ST) pour l'organe (8) de réglage de la turbine.

3. Procédé suivant la revendication 1 ou 2, caractérisé par le fait que les première et seconde grandeurs de réglage (SE, ST) sont composées de trois grandeurs de réglage partielles (ST₁ à ST₃; SE₁ à SE₃), une grandeur de réglage partielle (ST₁; SE₁) étant obtenue à partir d'une valeur de comparaison (Δn), qui est formée à partir d'un écart entre la vitesse réelle de rotation (nᵢ) et la vitesse de rotation de consigne (nₛ) de la turbine (2).

4. Procédé suivant la revendication 1 ou 2, dans le cas d'un couplage de l'ensemble turbine-génératrice à un réseau d'interconnexion, caractérisé par le fait que les première et seconde grandeurs de réglage (ST,SE) sont composées chacune de trois grandeurs de réglage partielles (ST₁ à ST₃; SE₁ à SE₃), une grandeur de réglage partielle (ST₁; SE₁) étant obtenue à partir d'une valeur de comparaison (Δf) formée à partir d'un écart entre la fréquence (fᵢ) du générateur et la fréquence (f) du réseau.

5. Procédé suivant la revendication 4, selon lequel les valeurs de comparaison (Δf, Δp), qui sont formées à partir d'un écart entre la fréquence (fᵢ) du générateur et la fréquence (fₛ) du réseau et à partir d'un écart entre la puissance réelle (Pᵢ) et la puissance de consigne (Pₛ) du générateur (6), sont couplées de deux manières.

6. Procédé suivant l'une des revendications 1 à 5, caractérisé par le fait que la valeur de comparaison (ΔP) pour la formation de la première grandeur de réglage (ST) est l'écart de la puissance du générateur.

7. Procédé suivant l'une des revendications 1 à 6, caractérisé par le fait que la valeur de comparaison (ΔU) pour la formation de la seconde grandeur de réglage (SE) est l'écart de la tension du générateur.

8. Dispositif de régulation d'un groupe turbine-génératrice comportant un régulateur (20), auquel sont envoyées, en tant que grandeurs d'entrée, des valeurs réelles de la puissance (P) du générateur et de la tension (U) du générateur, et qui délivre une première grandeur de réglage (ST) à un organe (8) de réglage de la turbine et une seconde grandeur de réglage (SE) à un organe (18) de réglage de l'excitatrice, les grandeurs de réglage (SE, ST) étant formées chacune d'au moins une valeur de comparaison (ΔP, ΔU), caractérisé par des moyens (19) pour combiner au moins deux grandeurs de réglage partielles (ST₂, ST₃), qui forment conjointement la première grandeur de réglage (ST) pour l'organe (8) de réglage de la turbine, l'une (ST₃) des grandeurs de réglage partielles étant obtenue à partir de la valeur de comparaison (ΔU) pour la formation de la seconde grandeur de réglage (SE) pour l'organe (18) de réglage de l'excitatrice.

9. Dispositif de régulation suivant la revendication 8, caractérisé par d'autres moyens (21) pour combiner au moins deux grandeurs de réglage partielles (SE₂, SE₃) qui forment ensemble la seconde grandeur de réglage (SE) pour l'organe (18) de réglage de l'excitatrice, l'une (SE₁) des grandeurs de réglage partielles étant formée à partir de la valeur de comparaison (ΔP) pour la formation de la grandeur de réglage (ST) pour l'organe (8) de réglage de la turbine.
